# EUROPEAN PATENT SPECIFICATION

(11) **EP 2 628 586 B1**
(45) Date of publication and mention of the grant of the patent: **02.07.2014**
(21) Application number: 12155365.5
(22) Date of filing: 14.02.2012
(51) Int. Cl.: B29C 70/44, G01L 19/00, B29C 70/54

(54) **Sensor arrangement and method for monitoring an infusion process**
Sensoranordnung und Verfahren zum Überwachen eines Infusionsverfahrens
Agencement de capteur et procédé de surveillance d'un processus d'infusion

(43) Date of publication of application: 21.08.2013
(73) Proprietor: Siemens Aktiengesellschaft, 80333 München (DE)
(72) Inventor: Jensen, Casper Houmann, 9000 Aalborg (DK)

(56) References cited:
- EP-A2- 2 105 285
- DE-A1- 19 507 143
- JP-A- 7 209 115
- US-A1- 2001 009 059
- US-A1- 2002 046 596

## Description

### Field of the Invention

The present invention relates to a sensor arrangement for monitoring an infusion process, a mould for vacuum assisted resin transfer moulding (VARTM) and to a method for monitoring an infusion process. The sensor arrangement, the mould and the method are for example applicable in a process for manufacturing a composite, for instance a wind turbine rotor blade, using vacuum assisted resin transfer moulding.

### Background Art

The document EP 2 105 285 A2 discloses a system for collecting data during vacuum molding of a composite part. The system comprises a sensor producing signal for example related to a vacuum pressure and a fluid pressure within the used mold.

One of the major tasks in the casting process of a large composite structure such as a wind turbine rotor blade is to ensure a correct flow of resin in the composite fibre structure and to ensure that all volume of the structure is soaked before ending the application of resin. One way to ensure that these tasks can be fulfilled is to monitor the flow of resin at selected points of the structure.

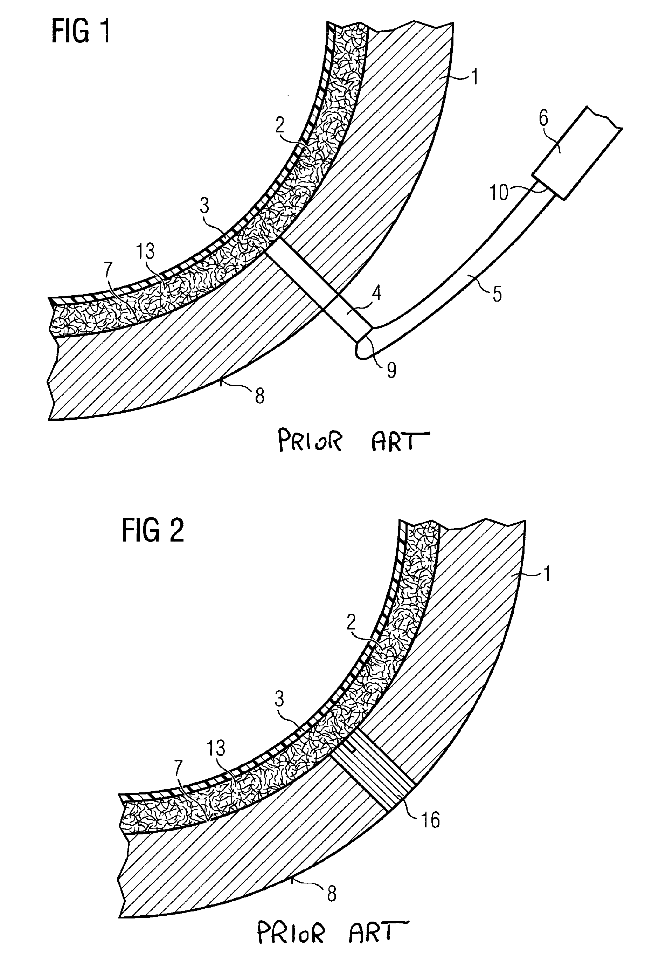

Three known different techniques for this will now be described with reference to Figures 1 to 3. Figures 1 to 3 schematically show part of a mould in a sectional view during vacuum assisted resin transfer moulding. The shown moulds 1 comprise an inner surface 7 and an outer surface 8. Glass fibre material 2 was placed onto the inner surface 7. The fibre material 2, which may additionally comprise for an increased stability of the composite, is covered by a plastic bag or vacuum bag 3. Resin is infused into the cavity 13 between the plastic bag 3 and the inner surface 7 of the mould 1, preferably by vacuum assisted resin transfer moulding.

In Figure 1 the mould 1 comprises an air outlet 4 between the inner surface 7 and an outer surface 8 of the mould 1. The air outlet 4 is connected to an inlet 9 of a hose 5. The hose 5 further comprises an outlet 10. The outlet 10 is connected to a pressure sensor 6. The pressure between the inner surface 7 of the mould 1 and the plastic bag or vacuum bag 3 is measured outside the mould 1. Furthermore, the air outlet 4 or the hose 5 may be connected to a vacuum pump. The pressure measured by the sensor 6 indicates the progress of the infusion process. The technique as shown in Figure 1 is very indirect and slow. Moreover, it requires a change of the hose 5 after each infusion process. The change of the hose 5 can be very difficult beneath a mould 1.

In Figure 2 a chemical resistant sensor 16 is placed in the mould 1. The sensor 16 needs to be cleaned in an acetone bath after each use and is thus very difficult to demount and maintain.

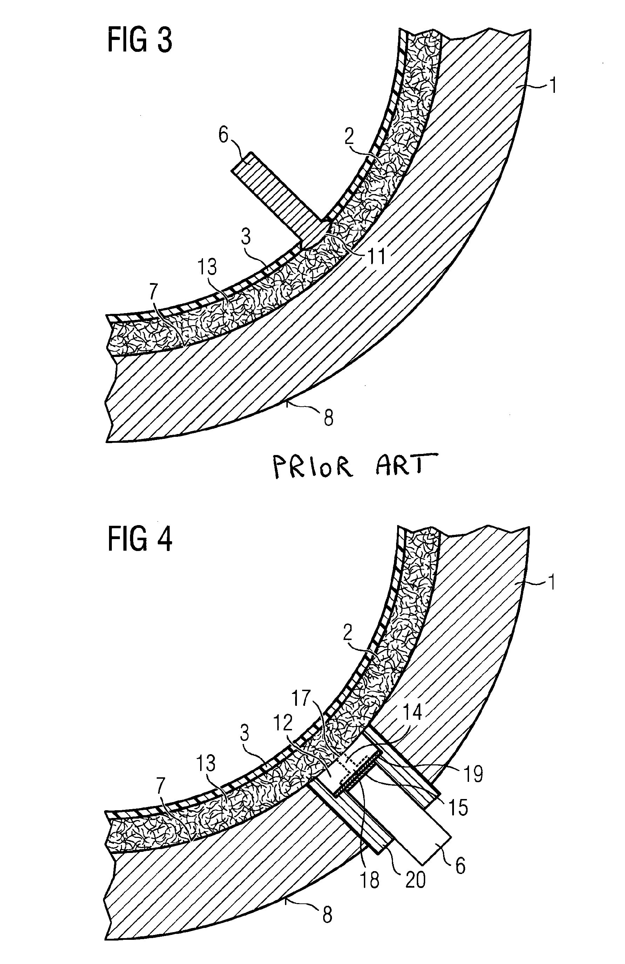

In Figure 3 the measurement of the progress of the infusion process is performed through the plastic bag 3. This requires a risky connection through the essential bag 3 and cannot be implemented in the integral blade concept, which means using a closed mould for vacuum assisted resin transfer moulding. In Figure 3 a seal 11 is located between the used sensor 6 and the resin flow channel between the plastic bag 3 and the inner surface 7 of the mould 1. There is a risk of resin attaching to the seal or the sensor during infusion and thereby forcing maintenance, for example mechanical or chemical maintenance.

### Description of the Invention

It is therefore a first objective of the present invention to provide an improved sensor arrangement for monitoring an infusion process in a flow channel which especially is easy to demount and maintain. It is a second objective of the present invention to provide an advantageous mould for vacuum assisted resin transfer moulding. A third objective is to provide an improved method for monitoring an infusion process in a flow channel, for example in a mould during a vacuum assisted resin transfer moulding process.

The first objective is solved by a sensor arrangement as claimed in claim 1. The second objective is solved by a mould as claimed in claim 8. The third objective is solved by a method for monitoring an infusion process as claimed in claim 9. The depending claims define further developments of the invention.

The inventive sensor arrangement for monitoring an infusion process in a flow channel comprises a pressure sensor and a plug. The pressure sensor comprises a sensor interface. The plug comprises an inner cavity or flow channel with an inlet and an outlet. To distinct the flow channel of the infusion process from the flow channel in the plug, the flow channel in the plug will be named as inner cavity. The inlet of the plug is in flow connection with the flow channel. The outlet of the plug is located at the sensor interface. For example, the outlet of the plug is facing towards the sensor interface. By means of the outlet of the plug a mechanical contact between the infused liquid and the sensor interface will be obtained to realise the pressure measurement.

The sensor arrangement can for example be used for monitoring the resin flow or the pressure in a wind turbine blade casting process. The combination of the pressure sensor with a described plug has the advantage, that the sensor with the plug can be integrated into the mould. After an infusion process only the plug need to be demounted and maintained. This can easily be done by screwing the plug out from the inner surface of the used mould or more generally of the used flow channel.

Moreover, the plug prevents the used glass fibre material which is placed in the mould during a casting process of a composite, for example a wind turbine rotor blade, from pressing on the sensor interface. This enables the sensor to measure the liquid and gas or vacuum pressure during the process. The plug can be replaced after each casting. This can be done from inside the mould, where all common maintenance is performed as well. Thus, it is more comfortable and less time consuming than for example changing a hose as mentioned in conjunction with the description of Figure 1. Furthermore, the plug in combination with a filter also enables a more direct measurement in the process, which the previously described hose does not, since the signal is delayed or distorted depending on the combination of length, height and inside diameter of the hose.

Advantageously the sensor arrangement comprises a means, for example a filter or cloth, to prevent the plug from applying pressure on the sensor interface. The used means can be located between the outlet of the plug and the sensor interface.

Furthermore, the sensor arrangement can comprise a means, for example a filter or cloth, to prevent an infused liquid, for example resin, from coming in direct contact with the sensor interface. Preventing the liquid from coming in direct contact with the sensor interface reduces significantly the wear of the sensor and reduces the possibility of any liquid, for example resin, to attach to the sensor. Thereby the maintenance which is necessary in the state of the art solutions as described with reference to Figures 2 and 3 can be reduced or eliminated. The filter or cloth also binds or holds the liquid, for example resin, to the plug when screwing it out after the casting process is done. The result is a clean sensor with minimal maintenance required.

The means to prevent the plug from applying pressure on the sensor interface and/or the means to prevent an infused liquid from coming in direct contact with the sensor interface can be realized by the same means, for example a filter. This means is preferably part of the plug and may hold the resin to the plug when demounting it out after the infusion process or casting process. The means, for example the filter, can be mounted with glue.

The sensor arrangement further comprises an insert element which at least partly surrounds the sensor and the plug and the means to prevent an infused liquid from coming in direct contact with the sensor interface and the means to prevent the plug from applying pressure on the sensor interface. Preferably, the insert element partly surrounds the sensor and the plug and a filter which is located between the sensor interface and the plug. The filter may be mounted with glue and an edge sealing to a sealing surface of the insert element. The sealing surface can prevent the plug from applying pressure on the sensor.

The insert element may comprise metal or may consist of metal. It can be integrated in the wall of a mould or flow channel. The sensor can be mounted from outside into the insert element, which can be located in the mould. This means that the sensor can be mounted from the outer surface of the mould. The sensor can be aligned flush with a sealing surface inside the insert element. The plug, for example a threaded plug can be mounted from the inside of the mould, which means from the inner surface of the mould. The plug provides that the infused liquid, for example resin, reaches the sensor interface.

Generally, the insert element can be insertable into a corresponding opening in a surface or wall of the flow channel. Preferably the flow channel comprises part of a mould and the insert element is insertable into a corresponding opening in a surface of the mould. The mould may be applicable for casting a composite. As already mentioned, the insert element and/or the plug may comprise a sealing surface which is aligned to flush with the sensor interface.

The metal insert provides a rigid sealing surface for the plug to be tightened against. This holds the filter or similar means to prevent the infused liquid from coming in direct contact with the sensor interface and/or to prevent the plug from applying pressure on the sensor interface in place. When the sensor is flush mounted it prevents the filter or similar means from being detached from the plug, since the force from the liquid is transferred to the sensor and the sealing surface directly. Instead of using a sealing surface the sensor interface on the sensor surface can be reduced. In this case the plug can seal on the sensor instead of on the insert element.

The inventive mould for vacuum assisted resin transfer moulding comprises a sensor arrangement as previously described. The inventive mould has the same features, properties and advantages as the previously described sensor arrangement. Preferably the mould comprises an inner surface and the sensor arrangement is integrated into a wall of the mould such that a surface of the plug comprising the inlet forms part of the inner surface of the mould.

The inventive method for monitoring an infusion process in a flow channel comprises the steps of a) placing a pressure sensor with a sensor interface and a plug comprising an inner cavity with an inlet and an outlet such in an opening in a surface of the flow channel that the inlet of the plug is in flow connection with the flow channel and the outlet of the plug is located at the sensor interface, b) infusing a liquid into the flow channel, and c) measuring the pressure at the sensor interface. The inventive method can be performed using the previously described inventive sensor arrangement.

The plug can face towards the sensor interface. The plug can be prevented from applying pressure on the sensor interface. This can be realized by using a means which is located between the outlet of the plug and the sensor interface, for example a filter or cloth.

Furthermore, an infused liquid, for example resin, can be prevented from coming in direct contact with the sensor interface, for example by means of a filter or cloth. This reduces time and costs for maintenance.

An insert element, for example a metal insert element, is inserted into a corresponding opening in the surface of the flow channel. The insert element at least partly surrounds the sensor and the plug and the used means for preventing an infused liquid from coming in direct contact with the sensor interface and the used means for preventing the plug from applying pressure on the sensor interface. Preferably the insert element is inserted into a corresponding opening in a surface of a mould forming at least part of the flow channel, for example a mould for casting a composite. The sensor interface can be sealed, for example by means of the plug or the insert element.

Advantageously, a resin infusion process is monitored in a vacuum assisted resin transfer moulding process by placing a sensor arrangement as previously described into a corresponding opening in the inner surface of a used mould and the pressure of the injected resin is measured at the sensor interface. After finishing the casting process the plug can be demounted.

### Embodiment

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Further features, properties and advantages of the present invention will become clear from the following description in conjunction with the accompanying drawings. All features are advantageous separate or in combination with each other.
- Figure 1: schematically shows in a sectional view part of a mould during manufacturing a wind turbine rotor blade.
- Figure 2: schematically shows in a sectional view part of a mould equipped with a chemical resistant sensor during the process of manufacturing a wind turbine rotor blade.
- Figure 3: schematically shows part of a mould during a process of manufacturing a wind turbine rotor blade in a sectional view comprising a sensor located at a vacuum bag.
- Figure 4: schematically shows part of a mould with an inventive sensor arrangement in a sectional view.
- Figure 5: schematically shows a plug in a perspective view.
- Figure 6: schematically shows an insert element in a perspective view.

An embodiment of the present invention will now be described with reference to Figures 4 to 6. Figure 4 schematically shows part of a mould 1 for manufacturing a composite, for example a wind turbine rotor blade, by means of vacuum assisted resin transfer moulding in a sectional view. The mould 1 comprises an inner surface 7 and an outer surface 8. A number of glass fibre layers 2 are laid onto the inner surface 7 of the mould 1. Additionally, balsa can be integrated into the glass fibre material 2. A plastic bag or vacuum bag 3 is laid onto the glass fibre material and/or balsa material 2.

A sensor arrangement is integrated into the mould 1. The sensor arrangement comprises a metal insert element 20. The metal insert element 20 is placed into a corresponding hole in the mould 1. The metal insert element 20 extends from the inner surface 7 to the outer surface 8 of the mould 1.

Inside the metal insert element 20 a pressure sensor 6 comprising a sensor interface 15 is located. The sensor interface 15 is facing towards the glass fibre material 2. A plug 12 is located between the sensor interface 15 and the glass fibre material 2. The plug 12 is also located inside of the metal insert 20. The plug 12 comprises a flow channel or inner cavity 14 with an inlet 17 and an outlet 18.

Between the inner surface 7 of the mould 1 and the plastic or vacuum bag 3 a flow channel 13 for distributing resin is formed. The inlet 17 of the flow channel or inner cavity 14 of the plug 12 faces towards the flow channel 13 and is in flow connection with this resin distribution channel. The outlet 18 of the inner cavity or flow channel 14 in the plug 12 is located at the sensor interface 15 and provides that the pressure inside the resin distribution channel 13 can be measured by means of the sensor 6.

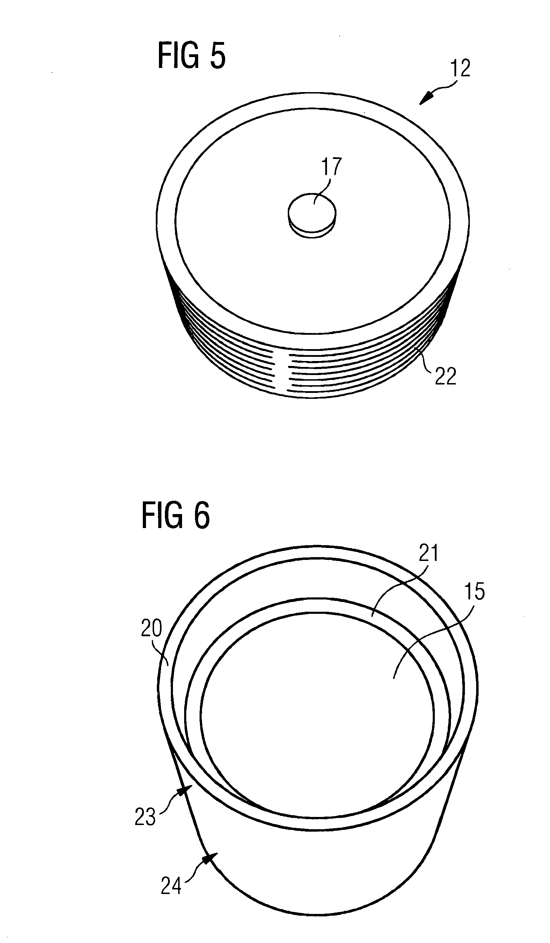

Moreover, a filter or cloth 19 is located between the outlet 18 of the plug 12 and the sensor interface 15. The filter or cloth 19 prevents direct contact between the sensor interface 15 and the infused resin, and equally holds the resin to the plug 12 when demounting the plug after the casting process. The filter or cloth 19 is mounted with glue and an edge sealing to the sealing surface of the metal insert. The sealing surface 21 of the insert element 20, which is shown in Figure 6, prevents the plug 12 from applying pressure on the sensor 6.

Figure 5 schematically shows the plug 12 in a perspective view. The top surface which is aligned flush with the inner surface 7 of the mould 1 when mounted is visible in Figure 5. The plug 12 has the shape of a cylinder. It comprises a screw thread 22 at its curved surface area. The top surface comprises the inlet 17.

Figure 6 schematically shows the metal insert element 20 in a perspective view. The top surface as it is visible from the inner surface 7 of the mould 1. The metal insert 20 has the general shape of a hollow cylinder. It comprises an upper portion 23 for holding the plug 12 and a lower portion 24 for holding the sensor 6. The upper portion 23 has a larger inner diameter than the lower portion 24. In Figure 6 the sensor 6 is located inside of the lower portion 24 of the metal insert 20. The sensor interface 15 is visible. At the changeover from the lower portion to the upper portion the metal insert 20 comprises a sealing surface 21 for the plug 12. The sealing surface 21 prevents the plug 12 from applying pressure on the sensor 6.

The present invention has the advantage, that a system for monitoring the progress of an injection process is provided which is very easy to mount and demount and which needs less maintenance than previously known solutions.

## Claims

1. Sensor arrangement for monitoring an infusion process in a flow channel (13) comprising a pressure sensor (6) with a sensor interface (15) and an insert element (20), **characterised in that**
the insert element at least partly surrounds the sensor (6) and a plug (12) comprising an inner cavity (14) with an inlet (17) and an outlet (18), the inlet (17) of the plug (12) being in flow connection with the flow channel (13) and the outlet (18) of the plug (12) being located at the sensor interface (15).

2. The sensor arrangement as claimed in claim 1,
wherein the sensor arrangement comprises a means (19) to prevent the plug from applying pressure on the sensor interface (15).

3. The sensor arrangement as claimed in claim 1 or claim 2, wherein the sensor arrangement comprises a means (19) to prevent an infused liquid from coming in direct contact with the sensor interface (15).

4. The sensor arrangement as claimed in claims 2 or claim 3, wherein the insert element (20) at least partly surrounds the means (19) to prevent an infused liquid from coming in direct contact with the sensor interface (15) and/or the means (19) to prevent the plug (12) from applying pressure on the sensor interface (15).

5. The sensor arrangement as claimed in any of the claims 1 to 4,
wherein the insert element (20) is insertable into a corresponding opening in a surface (7) of the flow channel (13).

6. The sensor arrangement as claimed in any of the claims 1 to 5,
wherein the flow channel (13) comprises part of a mould and the insert element (20) is insertable into a corresponding opening in a surface (7) of the mould.

7. The sensor arrangement as claimed in any of the claims 1 to 6,
wherein the insert element (20) and/or the plug (12) comprise a sealing surface (21) which is flush aligned with the sensor interface (15).

8. A mould for Vacuum Assisted Resin Transfer Moulding comprising a sensor arrangement as claimed in any of the claims 1 to 7.

9. Method for monitoring an infusion process in a flow channel (13) comprising the steps of
- inserting an insert element (20), which at least partly surrounds a pressure sensor (6) and a plug (12) into a corresponding opening in a surface (7) of the flow channel (13)
- placing the pressure sensor (6) with a sensor interface (15) and the plug (12) comprising an inner cavity (14) with an inlet (17) and an outlet (18) such in the opening in the surface (7) of the flow channel (13) that the inlet (17) of the plug (12) is in flow connection with the flow channel (13) and the outlet (18) of the plug (12) is located at the sensor interface (15),
- infusing a liquid into the flow channel (13), and
- measuring the pressure at the sensor interface (15).

10. The method as claimed in claim 9,
**characterised in**
preventing the plug (12) from applying pressure on the sensor interface (15).

11. The method as claimed in claim 9 or claim 10,
**characterised in**
preventing an infused liquid from coming in direct contact with the sensor interface (15).

12. The method as claimed in any of the claims 9 to 11,
**characterised in**
inserting an insert element (20), which at least partly surrounds a means (19) to prevent an infused liquid from coming in direct contact with the sensor interface (15) and/or a means (19) to prevent the plug (12) from applying pressure on the sensor interface (15), into a corresponding opening in a surface (7) of the flow channel (13).

13. The method as claimed in claim 12,
**characterised in**
inserting the insert element (20) into a corresponding opening in a surface of a mould forming at least part of the flow channel (13).

14. The method as claimed in any of the claims 9 to 13,
**characterised in**
sealing the sensor interface (15).

15. The method as claimed in any of the claims 9 to 14,
**characterised in**
monitoring a resin infusion process in a vacuum assisted resin transfer moulding process by placing a sensor arrangement as claimed in any of the claims 1 to 7 into a corresponding opening in the inner surface (7) of a used mould (1) and measuring the pressure of the injected resin at the sensor interface (15).

## Patentansprüche

1. Sensoranordnung zum Überwachen eines Infusionsvorgangs in einem Durchflusskanal (13), welche einen Drucksensor (6) mit einer Sensorschnittstelle (15) und ein Einsatzelement (20) umfasst,
**dadurch gekennzeichnet, dass**
das Einsatzelement wenigstens teilweise den Sensor (6) und einen Stopfen (12), der einen Innenhohlraum (14) mit einem Einlass (17) und einem Auslass (18) umfasst, umgibt, wobei der Einlass (17) des Stopfens (12) in Fließverbindung mit dem Durchflusskanal (13) steht und der Auslass (18) des Stopfens (12) an der Sensorschnittstelle (15) angeordnet ist.

2. Sensoranordnung nach Anspruch 1,
wobei die Sensoranordnung ein Mittel (19) zum Verhindern, dass der Stopfen Druck auf die Sensorschnittstelle (15) ausübt, umfasst.

3. Sensoranordnung nach Anspruch 1 oder Anspruch 2,
wobei die Sensoranordnung ein Mittel (19) zum Verhindern, dass eine infundierte Flüssigkeit in direkten Kontakt mit der Sensorschnittstelle (15) kommt, umfasst.

4. Sensoranordnung nach Anspruch 2 oder Anspruch 3,
wobei das Einsatzelement (20) wenigstens teilweise das Mittel (19) zum Verhindern, dass eine infundierte Flüssigkeit in direkten Kontakt mit der Sensorschnittstelle (15) kommt, und/oder das Mittel (19) zum Verhindern, dass der Stopfen (12) Druck auf die Sensorschnittstelle (15) ausübt, umgibt.

5. Sensoranordnung nach einem der Ansprüche 1 bis 4,
wobei das Einsatzelement (20) in eine entsprechende Öffnung in einer Fläche (7) des Durchflusskanals (13) einsetzbar ist.

6. Sensoranordnung nach einem der Ansprüche 1 bis 5,
wobei der Durchflusskanal (13) einen Teil einer Form umfasst und das Einsatzelement (20) in eine entsprechende Öffnung in einer Fläche (7) der Form einsetzbar ist.

7. Sensoranordnung nach einem der Ansprüche 1 bis 6,
wobei das Einsatzelement (20) und/oder der Stopfen (12) eine Dichtfläche (21) umfassen, welche mit der Sensorschnittstelle (15) bündig ausgerichtet ist.

8. Form für vakuumunterstütztes Harzspritzpressen, welche eine Sensoranordnung nach einem der Ansprüche 1 bis 7 umfasst.

9. Verfahren zum Überwachen eines Infusionsvorgangs in einem Durchflusskanal (13), welches die folgenden Schritte umfasst:
- Einsetzen eines Einsatzelements (20), welches einen Drucksensor (6) und einen Stopfen (12) wenigstens teilweise umgibt, in eine entsprechende Öffnung in einer Fläche (7) des Durchflusskanals (13),
- Anordnen des Drucksensors (6) mit einer Sensorschnittstelle (15) und des Stopfens (12), der einen Innenhohlraum (14) mit einem Einlass (17) und einem Auslass (18) umfasst, in der Öffnung in der Fläche (7) des Durchflusskanals (13) derart, dass der Einlass (17) des Stopfens (12) in Fließverbindung mit dem Durchflusskanal (13) steht und der Auslass (18) des Stopfens (12) an der Sensorschnittstelle (15) angeordnet ist,
- Infundieren einer Flüssigkeit in den Durchflusskanal (13) und
- Messen des Drucks an der Sensorschnittstelle (15).

10. Verfahren nach Anspruch 9,
**gekennzeichnet durch**
Verhindern, dass der Stopfen (12) Druck auf die Sensorschnittstelle (15) ausübt.

11. Verfahren nach Anspruch 9 oder Anspruch 10,
**gekennzeichnet durch**
Verhindern, dass eine infundierte Flüssigkeit in direkten Kontakt mit der Sensorschnittstelle (15) kommt.

12. Verfahren nach einem der Ansprüche 9 bis 11,
**gekennzeichnet durch**
Einsetzen eines Einsatzelements (20), welches ein Mittel (19) zum Verhindern, dass eine infundierte Flüssigkeit in direkten Kontakt mit der Sensorschnittstelle (15) kommt, und/oder ein Mittel (19) zum Verhindern, dass der Stopfen (12) Druck auf die Sensorschnittstelle (15) ausübt, mindestens teilweise umgibt, in eine entsprechende Öffnung in einer Fläche (7) des Durchflusskanals (13).

13. Verfahren nach Anspruch 12,
**gekennzeichnet durch**
Einsetzen des Einsatzelements (20) in eine entsprechende Öffnung in einer Fläche einer Form, die wenigstens einen Teil des Durchflusskanals (13) bildet.

14. Verfahren nach einem der Ansprüche 9 bis 13,
**gekennzeichnet durch**
Abdichten der Sensorschnittstelle (15).

15. Verfahren nach einem der Ansprüche 9 bis 14,
**gekennzeichnet durch**
Überwachen eines Harzinfusionsprozesses bei einem vakuumunterstützten Harzspritzpressprozess **durch** Anordnen einer Sensoranordnung nach einem der Ansprüche 1 bis 7 in einer entsprechenden Öffnung in der inneren Fläche (7) einer verwendeten Form (1) und Messen des Drucks des eingespritzten Harzes an der Sensorschnittstelle (15).

## Revendications

1. Agencement de capteur pour surveiller un processus d'infusion dans un canal d'écoulement (13) comprenant un capteur de pression (6) avec une interface de capteur (15) et un élément à insérer (20),
**caractérisé en ce que**
l'élément à insérer entoure au moins partiellement le capteur (6) et un obturateur (12) comprenant une cavité interne (14) avec un orifice d'entrée (17) et un orifice de sortie (18), l'orifice d'entrée (17) de l'obturateur (12) étant en connexion fluidique avec le canal d'écoulement (13) et l'orifice de sortie (18) de l'obturateur (12) étant situé au niveau de l'interface de capteur (15).

2. Agencement de capteur selon la revendication 1,
dans lequel l'agencement de capteur comprend un moyen (19) visant à empêcher l'obturateur d'appliquer une pression sur l'interface de capteur (15) .

3. Agencement de capteur selon la revendication 1 ou la revendication 2,
dans lequel l'agencement de capteur comprend un moyen (19) visant à empêcher un liquide infusé d'entrer en contact direct avec l'interface de capteur (15).

4. Agencement de capteur selon la revendication 2 ou la revendication 3,
dans lequel l'élément à insérer (20) entoure au moins partiellement le moyen (19) visant à empêcher un liquide infusé d'entrer en contact direct avec l'interface de capteur (15) et/ou le moyen (19) visant à empêcher l'obturateur (12) d'appliquer une pression sur l'interface de capteur (15).

5. Agencement de capteur selon l'une quelconque des revendications 1 à 4,
dans lequel l'élément à insérer (20) peut être inséré dans une ouverture correspondante dans une surface (7) du canal d'écoulement (13) .

6. Agencement de capteur selon l'une quelconque des revendications 1 à 5,
dans lequel le canal d'écoulement (13) comprend une partie d'un moule et l'élément à insérer (20) peut être inséré dans une ouverture correspondante dans une surface (7) du moule.

7. Agencement de capteur selon l'une quelconque des revendications 1 à 6,
dans lequel l'élément à insérer (20) et/ou l'obturateur (12) comprennent une surface d'étanchéité (21) qui est alignée à fleur avec l'interface de capteur (15).

8. Moule pour moulage par transfert de résine assisté sous vide comprenant un agencement de capteur selon l'une quelconque des revendications 1 à 7.

9. Procédé de surveillance d'un processus d'infusion dans un canal d'écoulement (13) comprenant les étapes
- d'insertion d'un élément à insérer (20), qui entoure au moins partiellement un capteur de pression (6) et un obturateur (12) dans une ouverture correspondante dans une surface (7) du canal d'écoulement (13)
- de placement du capteur de pression (6) avec une interface de capteur (15) et l'obturateur (12) comprenant une cavité interne (14) avec un orifice d'entrée (17) et un orifice de sortie (18) de telle sorte que dans l'ouverture dans la surface (7) du canal d'écoulement (13) l'orifice d'entrée (17) de l'obturateur (12) est en connexion fluidique avec le canal d'écoulement (13) et l'orifice de sortie (18) de l'obturateur (12) est situé au niveau de l'interface de capteur (15),
- d'infusion d'un liquide dans le canal d'écoulement (13), et
- de mesure de la pression au niveau de l'interface de capteur (15).

10. Procédé selon la revendication 9,
**caractérisé par** le fait
d'empêcher l'obturateur (12) d'appliquer une pression sur l'interface de capteur (15).

11. Procédé selon la revendication 9 ou la revendication 10,
**caractérisé par** le fait
d'empêcher un liquide infusé d'entrer en contact direct avec l'interface de capteur (15) .

12. Procédé selon l'une quelconque des revendications 9 à 11,
**caractérisé par** le fait
d'insérer un élément à insérer (20), qui entoure au moins partiellement un moyen (19) visant à empêcher un liquide infusé d'entrer en contact direct avec l'interface de capteur (15) et/ou un moyen (19) visant à empêcher l'obturateur (12) d'appliquer une pression sur l'interface de capteur (15), dans une ouverture correspondante dans une surface (7) du canal d'écoulement (13) .

13. Procédé selon la revendication 12,
**caractérisé par** le fait
d'insérer l'élément à insérer (20) dans une ouverture correspondante dans une surface d'un moule formant au moins une partie du canal d'écoulement (13).

14. Procédé selon l'une quelconque des revendications 9 à 13,
**caractérisé par** le fait
de sceller hermétiquement l'interface de capteur (15).

15. Procédé selon l'une quelconque des revendications 9 à 14,
**caractérisé par** le fait
de surveiller un processus d'infusion de résine dans un processus de moulage par transfert de résine assisté sous vide en plaçant un agencement de capteur selon l'une quelconque des revendications 1 à 7 dans une ouverture correspondante dans la surface interne (7) d'un moule utilisé (1) et de mesurer la pression de la résine injectée au niveau de l'interface de capteur (15) .
